# FASCICULE DE BREVET EUROPEEN

(11) **EP 3 328 690 B1**
(45) Date de publication et mention de la délivrance du brevet: **15.05.2019**
(21) Numéro de dépôt: 16745463.6
(22) Date de dépôt: 29.07.2016
(51) Int. Cl.: B60R 22/48, B60R 22/12, B60R 21/015

(54) **CEINTURE DE SECURITE, NOTAMMENT POUR SIÈGE D'AVION**
SICHERHEITSGURT, INSBESONDERE FÜR EINEN FLUGZEUGSITZ
SAFETY BELT, NAMELY FOR PLANE SEAT

(30) Priorité: 29.07.2015 US 201562198316 P
(43) Date de publication de la demande: 06.06.2018
(73) Titulaire: Zodiac Seats France, 36100 Issoudun (FR)
(72) Inventeur: BRUNAUX, Yannick, 59171 Croix (FR); GILL, Alison, 31100 Toulouse (FR)
(74) Mandataire: Marconnet, Sébastien
(86) Numéro de dépôt international: PCT/EP2016/068245
(87) Numéro de publication internationale: WO 2017/017278

(56) Documents cités:
- EP-A1- 2 052 923
- US-A- 5 086 785
- US-A1- 2009 093 932
- US-A1- 2009 177 357
- US-A1- 2010 071 483
- US-A1- 2010 253 498
- US-A1- 2010 283 593
- US-B1- 6 737 862

## Description

La présente invention porte sur une ceinture de sécurité, notamment une ceinture de sécurité pour siège d'avion.

L'invention vise à proposer une ceinture de sécurité dite "connectée" en ce que, outre sa fonction de maintien du corps d'un passager sur un siège pour assurer sa sécurité, elle permet de fournir et/ou transmettre notamment une information relative à l'état de fermeture de la ceinture de sécurité et/ou à la présence d'un passager entouré par la ceinture de sécurité. L'invention est adaptable à tous les types de sièges, en particulier les sièges économiques, affaires, et premières classes d'un avion.

La présente invention peut également trouver une application dans le domaine des véhicules de transport (voitures, bus, trains ...) nécessitant une utilisation d'une ceinture de sécurité.

Dans le domaine des avions, les mécanismes connus de fermeture d'une ceinture de sécurité sont standards pour la quasi-totalité des vols commerciaux. Ces mécanismes standards comportent de façon connue en soi une boucle formée par un élément mâle et un élément femelle aptes à coopérer entre eux pour assurer la fermeture de la ceinture. L'élément mâle et/ou l'élément femelle peuvent glisser par rapport à une sangle correspondante pour adapter la ceinture à la morphologie du passager. De telles ceintures ne comportent pas de système de détection automatique de leur fermeture.

En conséquence, leur fermeture est généralement vérifiée par un personnel de bord, notamment lors des phases de stationnement, de décollage, d'atterrissage de l'aéronef mais également en cas de turbulence et/ou de situation d'urgence. De telles vérifications visuelles sont toutefois longues à réaliser, et ne permettent pas de s'assurer que le passager détache sa ceinture de sécurité juste après le contrôle effectué par le personnel de bord. En outre, il existe des possibilités d'erreurs liées à de tels contrôles visuels réalisés par un être humain.

Par ailleurs, certains systèmes de supervision automatisés ont été proposés pour pallier aux problèmes précédemment évoqués. Toutefois, ces systèmes de supervision automatisés nécessitent une installation de sources d'énergie et de liaisons réseaux dédiées impliquant une modification et/ou une augmentation de l'encombrement du siège, afin que le siège puisse s'adapter au caractère intrusif de tels systèmes de supervision automatisés.

En outre, si certains dispositifs connus, tels que celui décrit dans le document US6737862, assurent une détection de la fermeture de la ceinture de sécurité, ils ne permettent pas de distinguer la présence d'une personne par rapport à celle d'un objet, ou de discriminer la position d'une ceinture de sécurité fermée qui serait située au-dessus ou en dessous du passager dans le cas où ce dernier serait assis sur la ceinture de sécurité.

Le document EP2052923 décrit une boucle de ceinture de sécurité comportant un dispositif de rappel de verrouillage de la ceinture, et un dispositif de détection de la présence d'un occupant. Le document US2009/093932 enseigne la réalisation d'un système de surveillance de ceinture de sécurité destiné à être utilisé à bord d'un véhicule. Le document US2010/283593 montre le préambule de la revendication 1 et décrit un système de surveillance de ceinture de sécurité sans fil permettant d'informer un conducteur qu'une ceinture de sécurité du véhicule est dans un état déverrouillé. Le document US5086785 divulgue un capteur permettant de détecter le déplacement angulaire d'un objet.

L'invention vise à remédier efficacement à ces inconvénients en proposant une ceinture de sécurité selon la revendication 1.

L'invention propose ainsi un système non intrusif, ergonomique, et autonome pour superviser l'état de fermeture de la ceinture du passager tout en s'assurant que la personne est correctement installée derrière la ceinture.

L'invention permet de diminuer de façon significative la durée du protocole de vérification de la fermeture des ceintures du fait de la centralisation du contrôle visuel par le personnel de bord.

L'invention fournit en outre un état de ceinture que le personnel de bord peut contrôler à tout moment et en temps réel via la communication, de préférence sans-fil, entre les ceintures et un système de supervision correspondant.

L'invention présente également un caractère économique, dans la mesure où l'installation du module sans-fil ne nécessite pas de modification du siège ou de son environnement (plancher ou plafond de la cabine), pour le passage de câbles réseaux dédiés.

Selon une réalisation, la ceinture de sécurité comporte une source d'énergie électrique pour être autonome électriquement.

Selon une réalisation, le système de détection d'état de la fermeture de la ceinture de sécurité, le système de détection de présence et/ou le module de communication sont implantés sur la première partie et/ou la deuxième partie de la ceinture de sécurité et/ou à l'intérieur de la boucle de fermeture de la ceinture de sécurité.

Selon une réalisation, le système de détection de présence est configuré pour être mis sous tension après détection d'une fermeture de la ceinture de sécurité. Cela permet de minimiser la consommation électrique du système.

Selon l'invention, le système de détection de présence comporte au moins un capteur dont une résistance électrique varie en fonction d'une courbure de la première partie et/ou de la deuxième partie de la ceinture de sécurité.

Selon une réalisation, le capteur est positionné à l'intérieur d'un espace prévu dans un tissage de la première partie et/ou de la deuxième partie de la ceinture de sécurité.

Selon une réalisation, le capteur est intégré dans la première partie et dans la deuxième partie de la ceinture de sécurité.

Selon une réalisation, le capteur s'étend sur une distance comprise entre 30% et 100%, de préférence entre 30% et 70%, d'une longueur totale de la première partie et/ou de la deuxième partie de la ceinture de sécurité.

Selon une réalisation, le capteur est réalisé dans un matériau piézorésistif.

Selon une réalisation, le système de détection de présence comporte un émetteur et un récepteur implantés respectivement dans la première partie et/ou la deuxième partie de la ceinture de sécurité pour générer un champ électrique.

Selon une réalisation, l'émetteur et le récepteur sont situés aux extrémités de la ceinture de sécurité.

Selon une réalisation, l'émetteur et le récepteur sont situés à une distance comprise entre 5 cm et 20 cm d'interfaces de fixation de la ceinture de sécurité avec une structure de siège. Cela permet d'éviter les interférences entre les signaux et une portion métallique d'une éventuelle ceinture portée par le passager pour maintenir un vêtement.

Selon une réalisation, l'émetteur et le récepteur sont positionnés à l'intérieur d'un espace prévu dans un tissage de la première partie et/ou de la deuxième partie de la ceinture de sécurité.

Selon une réalisation, le système de détection de présence comporte au moins un accéléromètre.

Selon une réalisation, l'accéléromètre est intégré dans la boucle de fermeture.

Selon une réalisation, le système de détection de présence comporte un module de comparaison de signaux transmis par l'accéléromètre pour un siège libre, un siège sur lequel est posé un objet, et un siège occupé par un passager auxquels une signature vibratoire propre à l'avion en fonctionnement aura préalablement été soustraite.

Selon une réalisation, l'accéléromètre est couplé à un gyromètre pour la réalisation d'une mesure complémentaire d'un angle formé entre la boucle de fermeture et une assise du siège et/ou un référentiel horizontal.

Selon une réalisation, le système de détection de présence comporte un émetteur et un récepteur implantés dans la boucle de fermeture, le récepteur étant apte à recevoir un champ magnétique réfléchi par un dossier du siège réalisé dans un matériau métallique.

Selon une réalisation, le module de communication est un module basse consommation intégrant une stratégie de gestion d'énergie électrique assurant une activation et une désactivation de différents composants dudit module de communication de façon à minimiser sa consommation électrique.

Selon une réalisation, le module de communication appartient à un réseau maillé. Cela permet de créer une communication réseau redondante et sécurisée à l'intérieur de la cabine d'aéronef.

Selon une réalisation, la boucle de fermeture comprend un élément mâle et un élément femelle, le système de détection d'état de la ceinture de sécurité comportant:
- un organe de réception agencé dans l'élément mâle, respectivement l'élément femelle de la boucle de fermeture, et
- un organe d'émission agencé dans l'élément femelle, respectivement l'élément maie de la boucle de fermeture.

Selon une réalisation, l'organe d'émission est une puce de type RFID.

Selon une réalisation, le système de détection d'état comporte un interrupteur magnétique.

Selon une réalisation, l'interrupteur magnétique comporte:
- un aimant intégré dans un élément mâle, respectivement dans un élément femelle de la boucle de fermeture, et
- un contacteur intégré dans l'élément femelle, respectivement l'élément maie de la boucle de fermeture.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1 est une représentation schématique d'une ceinture de sécurité selon la présente invention interagissant avec des dispositifs de supervision aptes à être utilisés par un personnel de bord;
- Les figures 2a et 2b sont des vues d'une première et d'une deuxième parties d'une ceinture de sécurité selon la présente invention;
- Les figures 3a et 3b sont des représentations schématiques illustrant deux variantes de réalisation d'un système de détection de la fermeture d'une ceinture de sécurité selon la présente invention;
- Les figures 4, 5, 6 et 7 sont des représentations schématiques illustrant respectivement un premier mode, un deuxième mode, un troisième mode et un quatrième mode de réalisation d'un système de détection de la présence d'un passager pour une ceinture de sécurité selon la présente invention;
- La figure 8a est une représentation graphique des différents types de signaux mesurés par un accéléromètre, respectivement pour un avion, un siège libre, un siège occupé par un passager, et un siège sur lequel est posé un objet; et
- La figure 8b est une représentation schématique des différents blocs fonctionnels de traitement des signaux mesurés par les accéléromètres intégrés dans des ceintures de sécurité selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

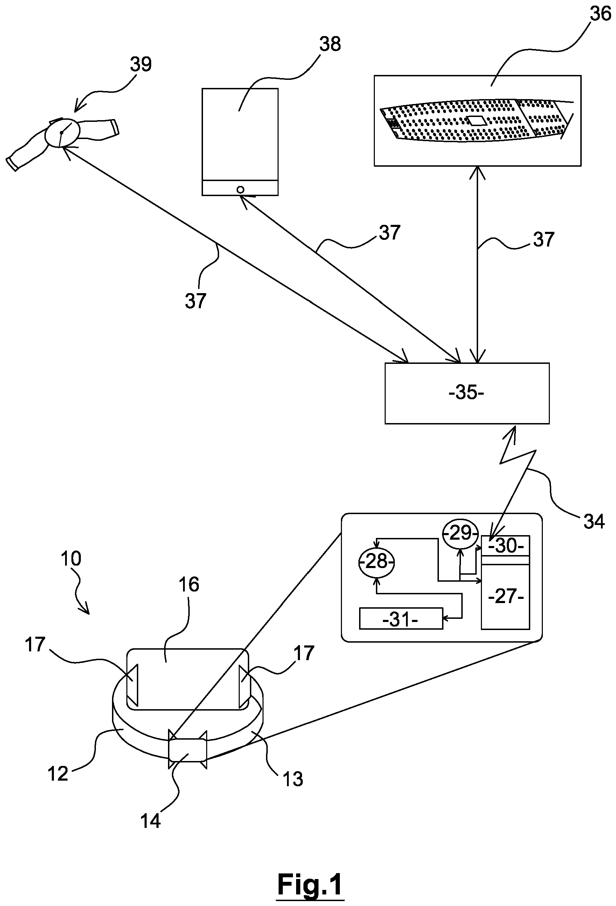

La figure 1 montre une ceinture de sécurité 10, notamment destinée à être montée sur un siège d'avion, comportant une première partie 12 et une deuxième partie 13. Préférentiellement, la première partie 12 et la deuxième partie 13 sont aptes à être attachées ensemble, particulièrement au moyen d'une boucle de fermeture 14. Dans une telle disposition, la ceinture de sécurité 10 permet de maintenir en position un passager sur un siège sur lequel il est assis.

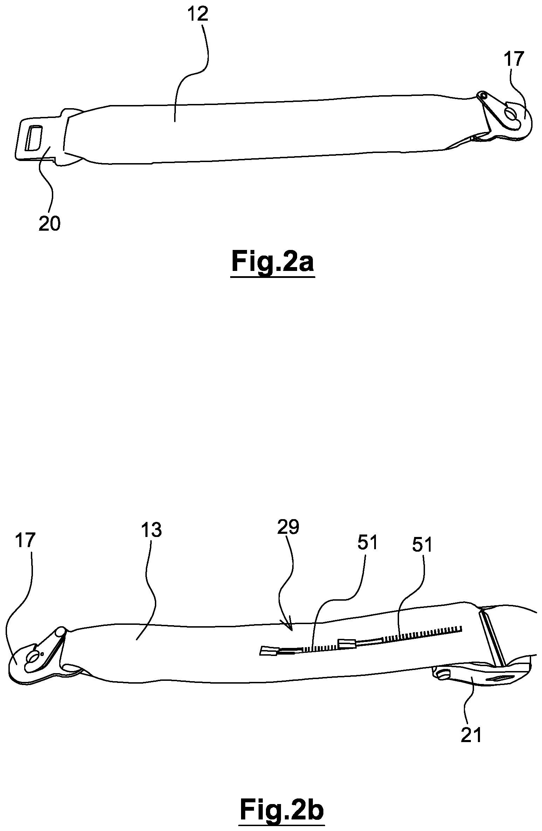

La première partie 12 et la deuxième partie 13 sont réalisées, par exemple, dans un matériau tissé. Selon un exemple particulier de réalisation, la première partie 12 et la deuxième partie 13 sont fixées par une de leurs extrémités à un élément de structure du siège 16. A cet effet, la première partie 12, respectivement la deuxième partie 13, comporte une interface de fixation 17, de préférence compatible avec les sièges existants. A titre d'exemple, de tels interfaces de fixation 17 sont présentés sur les figures 2a et 2b.

Du côté de leurs extrémités libres, la première partie 12 et la deuxième partie 13 sont susceptibles d'être reliées ensemble, en particulier de façon temporaire, via la boucle de fermeture 14. La boucle de fermeture 14 pourra être formée par un élément mâle 20, notamment en forme d'une plaque, avantageusement perforée, fixé à l'extrémité libre de la première partie 12 ou de la deuxième partie 13 et d'un élément femelle 21 correspondante fixé à l'autre de la deuxième partie 13 ou de la première partie 12, notamment munie d'un logement de réception de l'élément mâle 20, en particulier en forme de plaque.

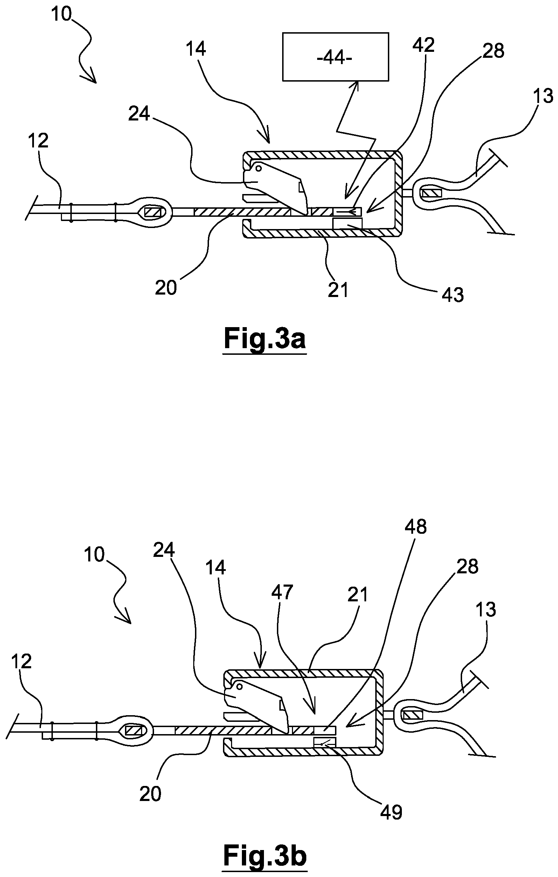

Comme cela est visible sur les figures 3a et 3b, la boucle de fermeture 14 comprend un loquet 24 permettant d'assurer le blocage de l'élément mâle 20 dans le logement de réception de l'élément femelle 21. En complément, la boucle de fermeture 14 comporte avantageusement un moyen de libération du loquet 24, notamment intégré dans l'élément femelle 21. Selon un exemple de réalisation, le moyen de libération du loquet 24 est actionnable manuellement par le passager afin de désolidariser la première partie 12 et de la deuxième partie 13 de la ceinture de sécurité 10.

Lorsque l'élément mâle 20 et l'élément femelle 21 de la boucle de fermeture 14 sont solidarisés l'un avec l'autre, la ceinture de sécurité 10 est dite en "position fermée". A l'inverse, lorsque l'élément mâle 20 et l'élément femelle 21 sont désolidarisées l'un de l'autre, la ceinture de sécurité 10 est dite en "position ouverte".

Selon la présente invention, la ceinture de sécurité 10 comporte en outre une unité de commande 27, visible en figure 1. L'unité de commande 27 peut être, selon l'exemple de réalisation présenté à la figure 1, en relation avec un système de détection d'état 28 permettant de détecter un état de ceinture de sécurité 10, notamment en "position fermée".

De plus, l'unité de commande 27 peut également comprendre un système de détection de présence 29 permettant de détecter une présence d'un passager avec la ceinture de sécurité 10 entourée autour de lui. Par "entourée", on entend le fait que la ceinture 10 s'étend autour du corps du passager suivant un secteur angulaire inférieur à 360 degrés, par exemple de l'ordre de 180 degrés, du fait de l'ancrage de la ceinture 10 sur le siège de part et d'autre du corps du passager.

Enfin, l'unité de commande 27 peut également comprendre un module de communication 30, notamment un module de communication sans-fil.

L'unité de commande 27 et/ou le système de détection d'état 28 et/ou le système de détection de présence 29 et/ou le module de communication 30 pourra (pourront) être alimenté(s) par au moins une source d'énergie 31. Avantageusement, la source d'énergie 31 est intégrée dans la ceinture de sécurité 10. Selon un mode particulier de réalisation, la source d'énergie 31 peut prendre la forme d'une pile de faible puissance, par exemple une pile bouton de type CR2477. La ceinture 10 est ainsi autonome électriquement.

L'unité de commande 27 et/ou le système de détection d'état 28 et/ou le système de détection de présence 29 et/ou le module de communication 30 et/ou la source d'énergie 31 sont implantés sur au moins la première partie 12 et/ou de la deuxième partie 13 de la ceinture de sécurité 10.

Alternativement ou en complément, l'unité de commande 27 et/ou le système de détection d'état 28 et/ou le système de détection de présence 29 et/ou le module de communication 30 et/ou la source d'énergie 31 sont implantés à l'intérieur de la boucle de fermeture 14.

Le module de communication 30 est apte à transmettre, notamment via une liaison radio 34, une information relative à un état de la ceinture de sécurité 10 correspondant à la "position fermée" et/ou à la présence d'un passager avec la ceinture de sécurité 10 entourée autour de lui, c'est-à-dire lorsque le passager est positionné entre la boucle et le dossier du siège. Notamment, le module de communication 30 est apte à transmettre les informations à destination d'un serveur de communication 35 de l'avion.

Un tel agencement comportant un module de communication 30 permet ainsi de disposer d'une ceinture de sécurité connectée selon la présente invention apte à transmettre les informations relatives à un état ou statut qui lui correspond.

Selon un exemple particulier de réalisation, le serveur de communication 35 pourra relayer l'information vers un écran de contrôle 36 destiné à un personnel de bord via une liaison de communication 37.

L'écran de contrôle 36 est apte à afficher un statut des sièges (fermeture/ouverture de la ceinture et/ou présence/absence du passager). Afin de se conformer à la norme DO-178, l'écran de contrôle 36 affiche également de préférence un défaut éventuel sur le siège qui demanderait une vérification manuelle par le personnel de bord. En particulier, le défaut pourra être lié à un dysfonctionnement du système de détection d'état 28 et/ou du système de détection de présence 29 et/ou du module de communication 30 entraînant une absence de transmission du statut du siège au personnel de bord.

Préférentiellement, l'écran de contrôle 36 est également apte à afficher un emplacement correspondant aux sièges de l'avion en fonction du statut de celui-ci, notamment lors des phases de décollage, d'atterrissage, de stationnement de l'avion, ainsi que dans des phases de turbulences.

La liaison de communication 37 entre le serveur de communication 35 et l'écran de contrôle 36 pourra être une liaison filaire ou une liaison sans-fil. Alternativement, les informations transmises par le module de communication 30 sont relayées vers un système portable 38 dédié, par exemple de type tablette, vers une montre connectée 39, ou plus généralement vers tout dispositif numérique portable adapté à l'application.

A cet effet, préférentiellement, chaque ceinture de sécurité 10 est munie d'un numéro unique d'identification associé à une place de siège dans l'avion. Une telle association pourra être effectuée de façon automatique ou manuelle via le réseau de l'avion, ou par tout autre moyen. En complément, un signal lumineux et/ou sonore correspondant à l'état du siège pourra être généré à l'intérieur d'une cabine de l'avion au niveau du siège considéré.

Selon une variante de réalisation, un signal visuel de rappel pourra être diffusé sur un écran de divertissement disposé dans l'avion afin de rappeler que la ceinture de sécurité 10 doit être actuellement en "position fermée".

Plus précisément, dans l'exemple de réalisation de la figure 3a, le système de détection d'état 28 de la ceinture de sécurité 10 pourra comporter
- un organe de réception 42, par exemple une antenne, notamment agencé dans l'élément mâle 20 de la boucle de fermeture 14, et
- un organe d'émission 43, par exemple une puce de type RFID (pour "RadioFrequency Identification" en anglais), notamment agencé dans l'élément femelle 21 de la boucle de fermeture 14.

Ainsi, suite à l'insertion de l'élément mâle 20 à l'intérieur d'élément femelle 21 de la boucle de fermeture 14, l'organe d'émission 43 associé à l'organe de réception 42 peut générer une information relative à la fermeture de la ceinture de sécurité 10. Par suite, avantageusement, l'information relative à la fermeture de la ceinture de sécurité 10 est transmise au serveur de communication 35. Plus particulièrement, l'information relative à la fermeture de la ceinture de sécurité 10 est transmise à une unité de lecture 44 associée au serveur de communication 35, en particulier suite à une requête émise par l'unité de lecture 44. En variante, la configuration est inversée, c'est-à-dire que l'organe de réception 42 est intégré dans l'élément femelle 21 et l'organe d'émission 43 est intégré dans l'élément mâle 20.

Dans l'exemple de réalisation de la figure 3b, le système de détection d'état 28 est un interrupteur magnétique 47. Selon un exemple de réalisation, l'interrupteur magnétique 47 comporte un aimant 48 intégré dans l'élément mâle 20 et un contacteur 49 intégré dans l'élément femelle 21 de la ceinture de sécurité 10. Ainsi, suite à l'insertion de l'élément mâle 20 à l'intérieur de l'élément femelle 21 de la boucle de fermeture 14, l'aimant 48 assure une fermeture du contacteur 49. En variante, la configuration est inversée, c'est-à-dire que l'aimant 48 est intégré dans la élément femelle 21 et l'interrupteur 49 est intégré dans l'élément mâle 20.

Le système de détection de présence 29 permettant de détecter la présence d'un passager entouré par la ceinture de sécurité 10 est de préférence configuré pour être mis sous tension, c'est-à-dire alimenté électriquement, après une détection de la fermeture de la ceinture de sécurité 10 par le système de détection d'état 28. Avantageusement, le système de détection de présence 29 est en veille tant que la ceinture de sécurité 10 n'est pas en "position fermée". Une telle configuration permet de minimiser la consommation électrique de la ceinture de sécurité 10.

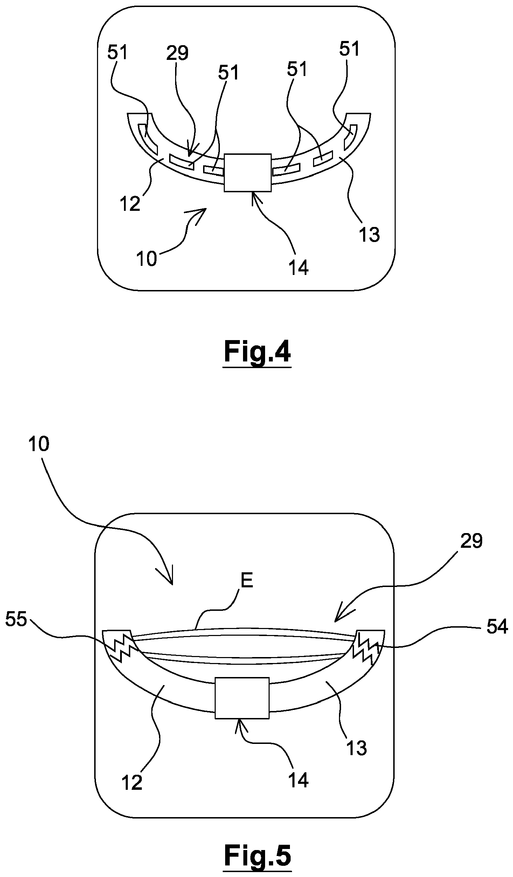

Dans le mode de réalisation des figures 2b et 4, le système de détection de présence 29 comporte au moins un capteur 51, avantageusement flexible. Selon l'invention, le capteur 51 est tel qu'il a une résistance électrique variant en fonction d'une courbure de la première partie 12 et/ou de la deuxième partie 13 de la ceinture de sécurité 10. On pourra, à cet effet, utiliser soit un capteur 51 allongé unique soit une pluralité de capteurs 51 positionnés côte à côte le long de la ceinture de sécurité 10.

La présence d'un passager est détectée lorsque la résistance électrique de la ceinture de sécurité 10 correspondant à la courbure du corps d'un passager se situe dans une plage de résistance électrique prédéterminée.

Le (les) capteur(s) 51 pourra (pourront) être positionnés
- au-dessus de la première partie 12 et/ou de la deuxième partie 13 de la ceinture de sécurité 10, c'est-à-dire contre une face externe de la première partie 12 et/ou de la deuxième partie 13 de la ceinture de sécurité 10, ou
- à l'intérieur d'un espace disposé dans la première partie 12 et/ou la deuxième partie 13 de la ceinture de sécurité 10, notamment prévu dans le tissage de la première partie 12 et/ou de la deuxième partie 13 de la ceinture de sécurité 10.

Dans le cas où le ou les capteurs 51 sont positionnés au-dessus de la première partie 12 et/ou de la deuxième partie 13 de la ceinture de sécurité 10, les capteurs 51 sont recouverts avantageusement d'une pellicule de protection de tissu ou d'une pellicule autocollante réalisée dans un matériau plastique ou composite. Le matériau composite pourra être un assemblage de deux composants non miscibles.

Avantageusement, le (les) capteur(s) 51 est (sont) intégré(s) dans la première partie 12 et la deuxième partie 13 de la ceinture de sécurité 10. Préférentiellement, le (les) capteur(s) 51 est (sont) intégré(s) s'étend(ent) suivant une distance comprise entre 30% et 100%, de préférence entre 30% et 70%, d'une longueur totale de la première partie 12 et/ou de la deuxième partie 13 de la ceinture de sécurité 10.

Le (les) capteur(s) 51 est (sont) réalisé(s) dans un matériau piézorésistif dont la résistance électrique varie en fonction d'une tension ou d'une flexion appliquée sur le capteur 51. Les caractéristiques du (des) capteur(s) 51 (dimensions, plages de température, pics de consommation...) pourront être adaptées en fonction de l'application et du type de capteur 51 utilisé.

Dans le mode de réalisation de la figure 5, le système de détection de présence 29 comporte un émetteur 54 et un récepteur 55, préférentiellement de type radiofréquence, implantés respectivement dans la première partie 12 et/ou la deuxième partie 13 de la ceinture de sécurité 10 pour générer un champ électrique E. La présence du passager est déduite suite à une détection d'impédance dans une plage donnée. On rappelle que l'impédance mesure l'opposition d'un circuit électrique au passage d'un courant alternatif associé au champ électrique correspondant. Dans le cas présent, le circuit électrique contient ou non le passager (suivant sa présence sur le siège). Le niveau d'impédance et la présence du passager pourra donc être déduite de la variation de champ électrique mesurée.

Les plages d'impédances mesurées grâce au système 29 pour les différents cas possibles (siège vide, siège sur lequel est posé un objet, ou siège occupé par un passager) sont dissociées les unes par rapport aux autres. Dans un exemple de réalisation, le siège vide présente une impédance comprise entre A1 et B1 kilo-ohms. Un objet posé sur le siège, tel qu'un ordinateur portable présente une impédance comprise entre A2 et B2 kilo-ohms. Une personne présente une impédance comprise entre A3 et B3 kilo-ohms. Les valeurs situées dans la plage A1-B1 sont supérieures aux valeurs situées dans la plage A2-B2. Les valeurs situées dans la plage A2-B2 sont supérieures aux valeurs situées dans la plage A3-B3. En outre, les valeurs de ces plages ne se recoupent pas les unes par rapport aux autres.

Ainsi, la valeur d'impédance mesurée par le système de détection de présence 29, notamment si une telle impédance est comprise entre A3 et B3 kilo-ohms, permet ainsi de discriminer la présence d'un passager sur le siège par rapport aux autres cas possibles. Les différentes plages d'impédances pourront varier en fonction des caractéristiques de l'émetteur 54 et du récepteur 55 utilisés et de l'environnement du siège (température, taux d'humidité dans l'air, etc...).

Alternativement, selon un autre mode de réalisation, un signal de référence ayant une fréquence et une amplitude données est échangé entre l'émetteur 54 et le récepteur 55. La détection de la présence d'un passager est effectuée par comparaison avec un signal modifié prédéterminé. Le signal modifié prédéterminé correspond à une variation attendue en amplitude et/ou en fréquence du signal de référence lorsqu'un passager est assis sur le siège.

L'émetteur 54 et le récepteur 55 sont situés aux extrémités de la ceinture de sécurité 10, de préférence à une distance comprise entre 5 et 20 centimètres des interfaces de fixation 17. Un tel agencement permet d'éviter les interférences entre les signaux et les portions métalliques d'une éventuelle ceinture portée par le passager pour maintenir un vêtement, tel qu'un pantalon, une jupe, une robe...

L'émetteur 54 et le récepteur 55 sont positionnés de préférence à l'intérieur d'un espace prévu disposé dans la première partie 12 et/ou la deuxième partie 13 de la ceinture de sécurité 10, notamment prévu dans le tissage de la première partie 12 et/ou de la deuxième partie 13 de la ceinture de sécurité 10. En variante, l'émetteur 54 et le récepteur 55 sont positionnés contre une face externe de la première partie 12 et/ou de la deuxième partie 13 de la ceinture de sécurité 10.

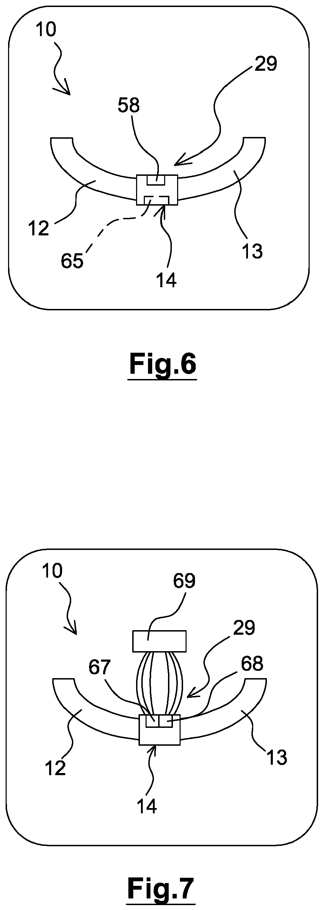

Dans le mode de réalisation de la figure 6, le système de détection de présence 29 comporte un accéléromètre 58 qui pourra être intégré dans la boucle de fermeture 14 de la ceinture de sécurité 10.

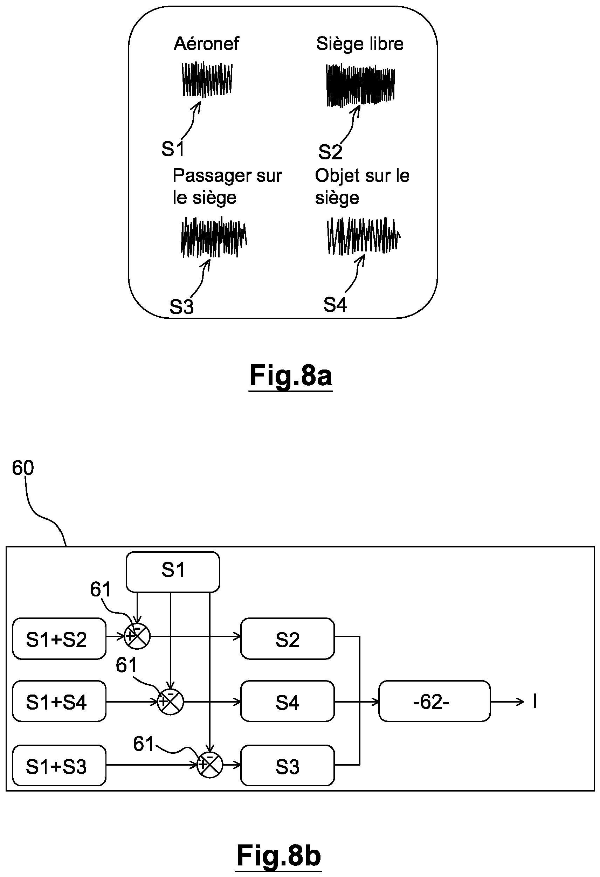

Comme cela est illustré sur la figure 8b, le système de détection de présence 29 comporte avantageusement un module de traitement 60 permettant de traiter des signaux S1, S2, S3, et S4.

Comme cela ressort de la figure 8a, les signaux S1, S2, S3, et S4 correspondent à des signatures vibratoires et les mesures effectuées par l'accéléromètre 58 correspondent à une combinaison de ces signatures vibratoires. Ainsi, le signal acquis par l'accéléromètre 58 pour un siège libre correspond à la signature vibratoire propre à l'avion et à la signature vibratoire du siège libre soit S1+S2. Le signal acquis par l'accéléromètre 58 sur un siège occupé par un passager correspond à la signature vibratoire propre à l'avion et à la signature vibratoire du siège occupé par le passager soit S1+S3. Le signal acquis par l'accéléromètre 58 sur un siège sur lequel est posé un objet correspond à la signature vibratoire propre à l'avion et à la signature vibratoire du siège sur lequel est posé l'objet soit S1+S4.

Selon une méthode particulière de réalisation, le module 60 soustrait la signature vibratoire S1 propre à l'avion aux signaux transmis par les accéléromètres 58 via les blocs soustractifs 61. Les signaux S2-S4 ainsi épurés du bruit de l'avion sont ensuite filtrés et comparés entre eux pour un ensemble de sièges, par exemple une colonne de sièges, au moyen du bloc fonctionnel 62. A cet effet, les signaux des différentes ceintures de sécurité 10 sont échangés via le réseau maillé décrit plus en détails ci-après.

Une information I relative à la présence d'un passager derrière une ceinture de sécurité 10 pourra être déduite en fonction de cette comparaison de signaux.

Le traitement des signaux S1, S2, S3, et S4 pourra être effectué soit par l'unité de commande 27 de la ceinture de sécurité 10, soit par un dispositif de calcul externe dédié.

En combinaison avec un tel traitement de signaux, il sera également possible de déterminer un angle formé entre la boucle de fermeture 14 et l'assise du siège et/ou un référentiel horizontal par exemple le sol de la cabine. Cela permet de confirmer la présence du passager entouré par la ceinture de sécurité 10. En effet, l'angle est sensiblement nul lorsque la boucle de fermeture 14 repose sur l'assise, mais est différent lorsque la boucle de fermeture 14 repose sur le passager du fait de la courbure que prend la ceinture de sécurité 10 pour épouser le corps du passager. Afin de fiabiliser une telle mesure d'angle, l'accéléromètre 58 pourra être couplé à un gyromètre 65.

Dans le mode de réalisation de la figure 7, le système de détection de présence 29 comporte un émetteur 67 et un récepteur 68, notamment du type radiofréquence, implantés dans la boucle de fermeture 14. Le récepteur 68 reçoit un champ magnétique réfléchi par un dossier 69 du siège réalisé dans un matériau métallique. La mesure de champ magnétique effectuée par le récepteur 68 varie en fonction de l'objet situé entre la boucle de fermeture 14 et le dossier du siège. Il est possible de discriminer les différents cas possibles (siège vide, siège sur lequel est posé un objet, ou siège occupé par un passager) en fonction des différentes plages de mesure de champ magnétique.

En effet, les plages de champ magnétique mesurées grâce au système 29 pour les différents cas possibles sont dissociées les unes par rapport aux autres. Dans un exemple de réalisation, le champ magnétique mesuré par le récepteur 68 pour un siège vide est compris entre A1' et B1' Tesla. Le champ magnétique mesuré par le récepteur 68 pour un objet posé sur le siège, tel qu'un ordinateur portable, est compris entre A2' et B2' Tesla. Le champ magnétique mesuré pour une personne assise sur le siège est compris entre A3' et B3' Tesla. Les valeurs de ces plages ne se recoupent pas les unes par rapport aux autres.

Ainsi, une valeur de champ magnétique mesurée par le récepteur 68, notamment si cette valeur est comprise entre A3' et B3' Tesla, permet ainsi de discriminer la présence d'un passager sur le siège par rapport aux autres cas possibles. Les différentes plages de champ magnétique pourront varier en fonction des caractéristiques de l'émetteur 67 et du récepteur 68 utilisés et de l'environnement du siège (température, taux d'humidité dans l'air, etc...).

Dans un exemple de réalisation, le récepteur 68 pourra par exemple être un capteur à effet Hall tandis que l'émetteur 67 pourra prendre la forme d'une antenne émettant un champ électro-magnétique.

De préférence, le module de communication 30 est un module basse consommation intégrant une stratégie de gestion d'énergie électrique assurant une activation et une désactivation des différents composants du module de façon à minimiser sa consommation électrique. En outre, le module de communication 30 utilise des protocoles standards de communication limitant également sa consommation d'énergie.

Avantageusement, le module de communication 30 appartient à un réseau maillé de façon à pouvoir notamment transmettre des informations d'une ceinture de sécurité 10 adjacente dont le module de communication serait détérioré. Cela permet de créer une communication réseau redondante et sécurisée à l'intérieur de la cabine d'avion. En outre, dans le mode de réalisation des figures 6 et 8a-8b, le réseau maillé est utilisé pour échanger les différents signaux vibratoires S2, S3, S4 mesurés par les accéléromètres 58. On rappelle que dans un réseau maillé, chaque élément faisant partie du réseau permet d'étendre la portée du réseau maillé aux éléments qui l'entoure. En outre, chaque élément peut recevoir et transmettre des informations aux éléments voisins, sans passer par un élément superviseur, comme c'est le cas dans d'autres types de réseaux.

De préférence, le module de communication 30 met en oeuvre un protocole de communication standardisé IEEE 802.15, notamment IEEE 802.15.4-2015. Suivant un exemple de réalisation, la vitesse de communication est comprise entre 20 kbps to 240 kbps et la portée peut atteindre 100 m. Ces données sont indiquées pour un réseau au sol. Dans un avion, la cabine joue un rôle de cage de Faraday, ce qui permet d'améliorer les performances du réseau.

Il est à noter que la ceinture de sécurité 10 pourra être installée en première monte, lors d'opérations de fabrication et d'installation pour les sièges d'avion préalablement à toute exploitation, ou comme un composant de seconde monte, lors d'opérations de maintenance pour des sièges d'avion en cours d'exploitation.

La ceinture de sécurité 10 pourra être adaptée à une ceinture de sécurité de type "trois points" munie en outre d'une zone de fixation au niveau d'une épaule du passager. La ceinture de sécurité 10 est également compatible avec les ceintures de sécurité intégrant un airbag.

La ceinture de sécurité 10 pourra être associée à une deuxième ceinture de sécurité adaptée pour le maintien d'un bébé, d'un passager à mobilité réduite ou autre type de passager particulier. La liaison entre les deux ceintures de sécurité pourra être effectuée au moyen d'un système de fixation rapide.

On décrit ci-après les perfectionnements que pourra embarquer la ceinture de sécurité 10 précédemment décrite.

Suivant certaines configurations, le module de communication 30 pourra communiquer avec un système multimédia associé au siège (ou système IFE pour "Inflight Entertainment System" en anglais) en affichant un message demandant au passager de boucler sa ceinture de sécurité 10. Lors de l'affichage du message, il sera possible d'interrompre les diffusions vidéos et/ou musicales en cours.

La ceinture de sécurité 10 pourra également intégrer une fonction additionnelle permettant de capter une activité cérébrale du passager afin de détecter les phases d'éveil ou de sommeil de ce dernier. A cet effet, la ceinture de sécurité 10 pourra intégrer des capteurs de mesure des données physiologiques du passager, telles que ses pulsations cardiaques, sa respiration... Les capteurs de mesure des données physiologiques pourront également être utilisés pour confirmer la présence du passager entouré par la ceinture de sécurité 10.

La ceinture de sécurité 10 pourra être réalisée à partir d'un textile standard ou d'un textile intégrant des composants additionnels, par exemple des guides lumineux. L'emploi de tels guides lumineux permet notamment d'indiquer, suivant la couleur de la lumière du guide lumineux, un état de fermeture de la ceinture de sécurité 10. En variante ou en complément, le textile pourra comporter un câblage électrique pour conduire un signal électrique.

La ceinture de sécurité 10 pourra en outre être réalisée dans un matériau souple, antimicrobien, et facile à nettoyer.

Un galet motorisé pourra également être intégré pour s'assurer de la tension de la ceinture de sécurité 10 sur le corps du passager.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Ceinture de sécurité (10), en particulier destinée à être installée sur un siège d'avion, comportant une première partie (12) et une deuxième partie (13) aptes à être attachées ensemble au moyen d'une boucle de fermeture (14) pour retenir le passager sur le siège, la ceinture de sécurité comportant:
- un système de détection d'état (28), apte à transmettre une information relative à un état de fermeture de la ceinture de sécurité (10), et
- un système de détection de présence (29), apte à transmettre une information relative à une présence d'un passager entouré par la ceinture de sécurité (10), et
- un module de communication (30), notamment sans-fil, apte à transmettre une information relative à la fermeture de la ceinture de sécurité (10) et/ou à la présence d'un passager entouré par la ceinture de sécurité (10),
**caractérisée en ce que** le système de détection de présence (29) comporte au moins un capteur (51) dont une résistance électrique varie en fonction d'une courbure de la première partie (12) et/ou de la deuxième partie (13) de la ceinture de sécurité (10).

2. Ceinture selon la revendication 1, **caractérisée en ce qu'**elle comporte une source d'énergie électrique pour être autonome électriquement.

3. Ceinture de sécurité (10) selon la revendication 1 ou 2, **caractérisée en ce que** le système de détection d'état (28) de la fermeture de la ceinture de sécurité (10), le système de détection de présence (29) et/ou le module de communication (30) sont implantés sur la première partie (12) et/ou la deuxième partie (13) de la ceinture de sécurité (10) et/ou à l'intérieur de la boucle de fermeture (14) de la ceinture de sécurité (10).

4. Ceinture de sécurité (10) selon l'une quelconque des revendications 1 à 3, **caractérisée en ce que** le système de détection de présence (29) est configuré pour être mis sous tension après détection d'une fermeture de la ceinture de sécurité (10).

5. Ceinture de sécurité (10) selon l'une quelconque des revendications 1 à 4, **caractérisée en ce que** le capteur (51) est positionné à l'intérieur d'un espace prévu dans un tissage de la première partie (12) et/ou de la deuxième partie (13) de la ceinture de sécurité (10).

6. Ceinture de sécurité (10) selon l'une quelconque des revendications 1 à 5, **caractérisée en ce que** le capteur (51) est intégré dans la première partie (12) et dans la deuxième partie (13) de la ceinture de sécurité (10).

7. Ceinture de sécurité (10) selon l'une quelconque des revendications 1 à 6, **caractérisée en ce que** le capteur (51) s'étend sur une distance comprise entre 30% et 100%, de préférence entre 30% et 70%, d'une longueur totale de la première partie (12) et/ou de la deuxième partie (13) de la ceinture de sécurité (10).

8. Ceinture de sécurité (10) selon l'une quelconque des revendications 1 à 7, **caractérisée en ce que** le capteur (51) est réalisé dans un matériau piézorésistif.

9. Ceinture de sécurité (10) selon l'une quelconque des revendications 1 à 8, **caractérisée en ce que** le système de détection de présence (29) comporte un émetteur (54) et un récepteur (55) implantés respectivement dans la première partie (12) et/ou la deuxième partie (13) de la ceinture de sécurité (10) pour générer un champ électrique (E).

10. Ceinture de sécurité (10) selon la revendication 9, **caractérisée en ce que** l'émetteur (54) et le récepteur (55) sont situés aux extrémités de la ceinture de sécurité (10).

11. Ceinture de sécurité (10) selon la revendication 10, **caractérisée en ce que** l'émetteur (54) et le récepteur (55) sont situés à une distance comprise entre 5 cm et 20 cm d'interfaces de fixation (17) de la ceinture de sécurité (10) avec une structure de siège (16).

12. Ceinture de sécurité (10) selon l'une quelconque des revendications 9 à 11, **caractérisée en ce que** l'émetteur (54) et le récepteur (55) sont positionnés à l'intérieur d'un espace prévu dans un tissage de la première partie (12) et/ou de la deuxième partie (13) de la ceinture de sécurité (10).

13. Ceinture de sécurité (10) selon l'une quelconque des revendications 1 à 12, **caractérisée en ce que** le système de détection de présence (29) comporte au moins un accéléromètre (58).

14. Ceinture de sécurité (10) selon la revendication 13, **caractérisée en ce que** l'accéléromètre (58) est intégré dans la boucle de fermeture (14).

15. Ceinture de sécurité (10) selon la revendication 13 ou 14, **caractérisée en ce que** le système de détection de présence (29) comporte un module de comparaison de signaux (S2-S4) transmis par l'accéléromètre (58) pour un siège libre, un siège sur lequel est posé un objet, et un siège occupé par un passager auxquels une signature vibratoire (S1) propre à l'avion en fonctionnement aura préalablement été soustraite.

16. Ceinture de sécurité (10) selon l'une quelconque des revendications 13 à 15, **caractérisée en ce que** l'accéléromètre (58) est couplé à un gyromètre (65) pour la réalisation d'une mesure complémentaire d'un angle formé entre la boucle de fermeture (14) et une assise du siège et/ou un référentiel horizontal.

## Patentansprüche

1. Sicherheitsgurt (10), insbesondere für einen Flugzeugsitz, mit einem ersten Teil (12) und einem zweiten Teil (13), die mittels einer Schließschnalle (14) aneinander befestigt werden können, um einen Passagier am Sitz zu halten,
wobei der Sicherheitsgurt umfasst:
- ein Zustandserfassungssystem (28) für die Übertragung einer Information über einen Schließzustand des Sicherheitsgurtes (10), und
- ein Anwesenheitserfassungssystem (29) für die Übertragung einer Information über das Anwesenheit eines von dem Sicherheitsgurt (10) gehaltenen Passagiers, und
- ein Kommunikationsmodul (30), insbesondere ein drahtloses Kommunikationsmodul, für die Übertragung einer Information über den Schließzustand des Sicherheitsgurtes (10) und/oder das Anwesenheit eines von dem Sicherheitsgurt (10) gehaltenen Passagiers,
**dadurch gekennzeichnet, dass**
das Anwesenheitserfassungssystem (29) mindestens einen Sensor (51) umfasst, dessen elektrischer Widerstand n Abhängigkeit von einer Krümmung des ersten Teils (12) und/oder des zweiten Teils (13) des Sicherheitsgurtes (10) variiert.

2. Sicherheitsgurt nach Anspruch 1, **dadurch gekennzeichnet, dass** er eine elektrische Energiequelle umfasst, damit er elektrisch autonom ist.

3. Sicherheitsgurt (10) nach Anspruch 1 oder 2, **dadurch gekennzeichnet, dass** das Zustandserkennungssystem (28) für den Schließzustand des Sicherheitsgurtes (10), das Anwesenheitserkennungssystem (29) und/oder das Kommunikationsmodul (30) am ersten Teil (12) und/oder am zweiten Teil (13) des Sicherheitsgurtes (10) und/oder innerhalb der Schließschnalle (14) des Sicherheitsgurtes (10) angeordnet sind.

4. Sicherheitsgurt (10) nach einem der Ansprüche 1 bis 3, **dadurch gekennzeichnet, dass** das Anwesenheitserfassungssystem (29) so konfiguriert ist, dass es nach dem Erkennen eines Schließzustands des Sicherheitsgurtes (10) unter Spannung gesetzt wird.

5. Sicherheitsgurt (10) nach einem der Ansprüche 1 bis 4, **dadurch gekennzeichnet, dass** der Sensor (51) innerhalb eines in einem Gewebeabschnitt des ersten Teils (12) und/oder des zweiten Teils (13) des Sicherheitsgurtes (10) ausgebildeten Raums angeordnet ist.

6. Sicherheitsgurt (10) nach einem der Ansprüche 1 bis 5, **dadurch gekennzeichnet, dass** der Sensor (51) im ersten Teil (12) und im zweiten Teil (13) des Sicherheitsgurtes (10) integriert ist.

7. Sicherheitsgurt (10) nach einem der Ansprüche 1 bis 6, **dadurch gekennzeichnet, dass** sich der Sensor (51) über eine Distanz zwischen 30% und 100%, vorzugsweise zwischen 30% und 70%, einer Gesamtlänge des ersten Teils (12) und/oder des zweiten Teils (13) des Sicherheitsgurtes (10) erstreckt.

8. Sicherheitsgurt (10) nach einem der Ansprüche 1 bis 7, **dadurch gekennzeichnet, dass** der Sensor (51) aus einem piezoresistiven Material hergestellt ist.

9. Sicherheitsgurt (10) nach einem der Ansprüche 1 bis 8, **dadurch gekennzeichnet, dass** das Anwesenheitserfassungssystem (29) einen Sender (54) und einen Empfänger (55) umfasst, die jeweils im ersten Teil (12) und/oder im zweiten Teil (13) des Sicherheitsgurtes (10) angeordnet sind, um ein elektrisches Feld (E) zu erzeugen.

10. Sicherheitsgurt (10) nach Anspruch 9, **dadurch gekennzeichnet, dass** der Sender (54) und der Empfänger (55) an den Enden des Sicherheitsgurtes (10) angeordnet sind.

11. Sicherheitsgurt (10) nach Anspruch 10, **dadurch gekennzeichnet, dass** der Sender (54) und der Empfänger (55) in einem Abstand zwischen 5 cm und 20 cm von den Befestigungsschnittstellen (17) des Sicherheitsgurtes (10) mit einer Sitzstruktur (16) angeordnet sind.

12. Sicherheitsgurt (10) nach einem der Ansprüche 9 bis 11, **dadurch gekennzeichnet, dass** der Sender (54) und der Empfänger (55) innerhalb eines in einem Gewebeabschnitt des ersten Teils (12) und/oder des zweiten Teils (13) des Sicherheitsgurtes (10) ausgebildeten Raums angeordnet ist.

13. Sicherheitsgurt (10) nach einem der Ansprüche 1 bis 12, **dadurch gekennzeichnet, dass** das Anwesenheitserfassungssystem (29) mindestens einen Beschleunigungsmesser (58) umfasst.

14. Sicherheitsgurt (10) nach Anspruch 13, **dadurch gekennzeichnet, dass** der Beschleunigungsmesser (58) in der Schließschnalle (14) angeordnet ist.

15. Sicherheitsgurt (10) nach Anspruch 13 oder 14, **dadurch gekennzeichnet, dass** das Anwesenheitserfassungssystem (29) ein Signalvergleichsmodul (S2-S4) für Signale umfasst, die vom Beschleunigungsmesser (58) für einen freien Sitz, einen Sitz mit einem Objekt darauf und einen Sitz mit einem Passagier darauf übertragen werden, und von den zuvor eine für das Flugzeug in Betrieb spezifisch Vibrationssignatur (S1) abgezogen wurde.

16. Sicherheitsgurt (10) nach einem der Ansprüche 13 bis 15, **dadurch gekennzeichnet, dass** der Beschleunigungsmesser (58) mit einem Gyrometer (65) gekoppelt ist, um eine komplementäre Messung eines zwischen der Schließschnalle (14) und einer Auflagefläche des Sitzes und/oder einem horizontalen Bezugsystem gebildeten Winkels durchzuführen.

## Claims

1. A seat belt (10), in particular for an aircraft seat, comprising a first part (12) and a second part (13) capable of being fastened together by means of a closing buckle (14) to hold a passenger on the seat,
the seat belt comprising:
- a state detection system (28) capable of transmitting information about a closing state of the seat belt (10), and
- a presence detection system (29) capable of transmitting information about the presence of a passenger hold by the seat belt (10), and
- a communication module (30), in particular a wireless communication module, capable of transmitting information about the closing state of the seat belt (10) and/or the presence of a passenger hold by the seat belt (10),
**characterized in that**
the presence detection system (29) comprises at least one sensor (51) whose electrical resistance varies according to a curvature of the first part (12) and/or the second part (13) of the seat belt (10).

2. The seat belt according to claim 1, **characterized in that** it comprises a source of electrical energy so as to be electrically autonomous.

3. The seat belt (10) according to claim 1 or 2, **characterized in that** the state detection system (28) for the closing state of the seat belt (10), the presence detection system (29) and/or the communication module (30) are arranged on the first part (12) and/or the second part (13) of the seat belt (10) and/or inside the closing buckle (14) of the seat belt (10).

4. The seat belt (10) according to any of the claims 1 to 3, **characterized in that** the presence detection system (29) is configured to be energized after detection of a closing state of the seat belt (10).

5. The seat belt (10) according to any of the claims 1 to 4, **characterized in that** the sensor (51) is positioned inside a space provided in a weaved portion of the first part (12) and/or of the second part (13) of the seat belt (10).

6. The seat belt (10) according to any of the claims 1 to 5, **characterized in that** the sensor (51) is integrated in the first part (12) and in the second part (13) of the seat belt (10) .

7. The seat belt (10) according to any of the claims 1 to 6, **characterized in that** the sensor (51) extends over a distance comprised between 30% and 100%, preferably between 30% and 70%, of a total length of the first part (12) and/or the second part (13) of the seat belt (10).

8. The seat belt (10) according to any of the claims 1 to 7, **characterized in that** the sensor (51) is made of a piezoresistive material.

9. The seat belt (10) according to any of the claims 1 to 8, **characterized in that** the presence detection system (29) comprises an emitter (54) and a receiver (55) respectively located in the first part (12) and/or the second part (13) of the seat belt (10) so as to generate an electric field (E).

10. The seat belt (10) according to claim 9, **characterized in that** the emitter (54) and the receiver (55) are located at the ends of the seat belt (10).

11. The seat belt (10) according to claim 10, **characterized in that** the emitter (54) and the receiver (55) are located at a distance comprised between 5 cm and 20 cm from fixing interfaces (17) of the seat belt (10) with a seat structure (16) .

12. The seat belt (10) according to any of the claims 9 to 11, **characterized in that** the emitter (54) and the receiver (55) are positioned inside a space provided in a weaved portion of the first part (12) and/or of the second part (13) of the seat belt (10).

13. The seat belt (10) according to any of the claims 1 to 12, **characterized in that** the presence detection system (29) comprises at least one accelerometer (58).

14. The seat belt (10) according to claim 13, **characterized in that** the accelerometer (58) is integrated in the closing buckle (14).

15. The seat belt (10) according to claim 13 or 14, **characterized in that** the presence detection system (29) comprises a signal comparison module (S2-S4) for signals that are transmitted by the accelerometer (58) for a free seat, a seat with an object thereon, and a seat with a passenger thereon, and from which a vibration signature (S1) specific to the aircraft in operation has previously been subtracted.

16. The seat belt (10) according to any of the claims 13 to 15, **characterized in that** the accelerometer (58) is coupled to a gyrometer (65) for performing a complementary measurement of an angle formed between the closing buckle (14) and a seating surface of the seat and/or a horizontal reference frame.
